Europäisches Patentamt

European Patent Office

Office européen des brevets

(19)

(11) **EP 1 110 106 B1**

(12) **FASCICULE DE BREVET EUROPEEN**

(45) Date de publication et mention
de la délivrance du brevet:
**06.10.2004 Bulletin 2004/41**

(21) Numéro de dépôt: **00946043.7**

(22) Date de dépôt: **30.06.2000**

(51) Int Cl.[7]: **G01V 11/00**

(86) Numéro de dépôt international:
**PCT/FR2000/001853**

(87) Numéro de publication internationale:
**WO 2001/002876 (11.01.2001 Gazette 2001/02)**

(54) **METHODE POUR DEFORMER GRADUELLEMENT DES SIMULATIONS SEQUENTIELLES D'UN MILIEU HETEROGENE TEL QU'UNE ZONE SOUTERRAINE**

Verfahren zur stufenweisen Verformung von sequentiellen Simulationen eines heterogenen Mediums wie z.B. einer unterirdischen Formation

Method for gradually deforming sequential simulations of a heterogeneous environment like a subterranean zone for instance

(84) Etats contractants désignés:
**AT BE CH CY DE DK ES FI FR GB GR IE IT LI LU MC NL PT SE**

(30) Priorité: **02.07.1999 FR 9908605**

(43) Date de publication de la demande:
**27.06.2001 Bulletin 2001/26**

(73) Titulaires:
• **Institut Français du Pétrole**
**92852 Rueil-Malmaison Cedex (FR)**
• **Total Fina Elf S.A.**
**92400 Courbevoie (FR)**

(72) Inventeurs:
• **HU, Lin-Ying**
**F-64140 Billere (FR)**

• **NOETINGER, Benoît**
**F-64000 Pau (FR)**

(56) Documents cités:
**EP-A- 0 911 652        US-A- 5 838 634**

• **DEUTSCH C V ET AL: "GEOSTATISTICAL TECHNIQUES IMPROVE RESERVOIR MANAGEMENT" PETROLEUM ENGINEER INTERNATIONAL,US,HART PUBLICATIONS, vol. 69, no. 3, 1 March 1996 (1996-03-01), pages 21-22,24-27, XP000596614 ISSN: 0164-8322**
• **CARR JAMES R ET AL: "Use of geostatistics for accurate mapping of earthquake ground motion" GEOPHYSICAL JOURNAL,US,GORDON AND BREACH, NEW YORK, NY, vol. 97, 1 January 1989 (1989-01-01), pages 31-40, XP002097135 ISSN: 0275-9128**

**Description**

La présente invention a pour objet une méthode pour déformer graduellement des représentations ou réalisations, générés par simulation séquentielle, d'un modèle stochastique non nécessairement gaussien d'un milieu hétérogène, en se basant sur un algorithme de déformation graduelle de modèles stochastiques gaussiens.

La méthode selon l'invention trouve des applications dans la modélisation de zones souterraines où il s'agit de générer des représentations montrant comment est distribuée une certaine grandeur physique dans une zone du sous-sol (la perméabilité z par exemple), qui soient compatibles au mieux avec des données observées ou mesurées : données géologiques, enregistrements sismiques, mesures obtenues dans des puits notamment mesures des variations au cours du temps de la pression et du débit de fluides issus d'un gisement etc.

**Etat de la technique**

Par la demande de brevet FR 98/09.018, on connaît une méthode pour déformer graduellement un modèle stochastique (de type gaussien ou apparenté) d'un milieu hétérogène tel qu'une zone souterraine, contraint par une ensemble de paramètres relatifs à la structure du milieu. Cette méthode comporte le tirage d'un nombre p (p=2 par exemple) de réalisations (ou représentations) indépendantes du modèle ou d'une partie au moins du modèle choisi du milieu, parmi l'ensemble de toutes les réalisations possibles et une ou plusieurs étapes itératives de déformation graduelle du modèle en effectuant une ou plusieurs combinaisons linéaires successives de p réalisations initiales indépendantes entre elles puis des réalisations composites successivement obtenues éventuellement avec de nouveaux tirages, etc., les coefficients de cette combinaison étant tels que la somme de leurs carrés est égale à 1.

Les modèles gaussiens ou apparentés conviennent pour modéliser des champs de grandeurs continues et, de ce fait, sont mal adaptés à la modélisation de zones traversées par des réseaux de fractures ou des systèmes de chenaux, par exemple.

On connaît par ailleurs les algorithmes dits de simulation séquentielle, les plus largement utilisés parmi les algorithmes de simulation géostatistique. Bien qu'ils conviennent particulièrement pour la simulation des modèles gaussiens, il n'impliquent pas en principe une limitation à ce type de modèle.

On forme une représentation géostatistique d'une zone souterraine par exemple en la subdivisant par un réseau à N mailles et en déterminant un vecteur aléatoire à N dimensions $Z = (Z_1, Z_2,.... Z_N)$ correspondant au mieux à des mesures ou observations obtenues sur la zone. Comme le montre par exemple Johnson, M.E. ; in « Multivariate Statistical Simulation » ; Wiley & Sons, New York, 1987, cette approche réduit le problème de la création d'un vecteur à N dimensions à une série de N problèmes mono-dimensionnels. Un tel vecteur aléatoire n'est ni nécessairement multi-gaussien ni stationnaire. La simulation séquentielle de Z implique d'abord la définition d'un ordre selon lequel les N éléments $(Z_1, Z_2,.... Z_N)$ du vecteur Z sont générés l'un après l'autre. Sans rien perdre de généralité, on suppose que les N éléments de Z sont générés en séquence depuis $Z_1$ jusqu'à $Z_N$. Pour tirer une valeur de chaque élément $Z_i$, (i = 1, ..., N), il faut réaliser les opérations suivantes :

a) construire la distribution de $Z_i$ conditionnée par $(Z_1, Z_2.. Z_{i-1})$

$$F_c(z_i) = P(Z_i \leq z_i \ / \ Z_1, Z_2,.... Z_{i-1}) \ ;$$

et

b) tirer une valeur de $Z_i$ de la distribution $F_c(z_i)$.

Dans la pratique de la géostatistique, la simulation séquentielle est utilisée fréquemment pour engendrer des vecteurs multi-gaussiens et des vecteurs d'indicateur non-gaussiens. La tâche principale de la simulation séquentielle est la détermination des distributions conditionnelles $F_c(z_i)$ (i = 1, ..., N). Des algorithmes et logiciels pour estimer ces distributions sont décrits par exemple dans :

-   Deutsch, C.V. et al, « GSLIB (Geostatistical Software Library) and User's Guide » ; Oxford University Press, New York, Oxford 1992.

En ce qui concerne le tirage des valeurs à partir de la distribution $F_c(z_i)$, il existe aussi un vaste ensemble d'algorithmes connus.

On considère la méthode de distribution inverse par laquelle on obtient une réalisation de $Z_i$ : $z_i = F_c^{-1}(u_i)$, où $u_i$ est tiré d'une distribution uniforme entre 0 et 1. Il s'ensuit qu'une réalisation du vecteur Z correspond à une réalisation du vecteur U dont les éléments $U_1$, $U_2$, ....,$U_N$, sont mutuellement indépendants et uniformément distribués entre 0 et 1.

On s'aperçoit qu'une simulation séquentielle est une opération S qui transforme un vecteur uniforme U= ($U_1$, $U_2$, ....,$U_N$) en un vecteur structuré Z = ($Z_1$, $Z_2$,.... $Z_N$) :

$$Z = S(U) \hspace{4cm} (1)$$

Le problème que représente la contrainte d'un vecteur Z à différents types de données peut être résolu en contraignant les distributions conditionnelles $F_c(z_i)$ (i = 1, ..., N) et/ou le vecteur uniforme U= ($U_1$, $U_2$, ....,$U_N$).

Des travaux récents sur l'algorithme séquentiel ont été concentrés sur l'amélioration de l'estimation des distributions conditionnelles $F_c(z_i)$ par intégration de données géologiques et de données sismiques.

On peut citer par exemple le papier de Zhu, H. et al ; « Formatting and Integrating Soft Data : Stochastic Imaging via the Markov-Bayes Algorithm » in Soares, A., Ed. Geostatistics Troia 92, vol.1 : Kluwer Acad. Publ., Dordrecht, The Netherlands, p.1-12, 1993.

Cependant, cette approche ne peut être étendue à l'intégration de données non linéaires comme les pressions issues des tests de puits et les historiques de production, sauf à imposer une sévère linéarisation. En outre, comme toute combinaison de vecteurs uniformes U ne donne pas un vecteur uniforme, la méthode de déformation graduelle d'un modèle stochastique développée dans le brevet déjà cité, ne peut être directement appliquée dans le cadre de la technique séquentielle rappelée ci-dessus.

Aussi, la méthode selon l'invention permet de rendre compatible les deux approches i.e. d'étendre le formalisme développé dans le brevet précédemment cité, à la déformation graduelle de réalisations, générées par simulation séquentielle, d'un modèle stochastique non nécessairement gaussien.

**Définition de la méthode**

La méthode permet de déformer graduellement une représentation ou réalisation, générée par simulation séquentielle, d'un modèle stochastique non nécessairement gaussien d'une grandeur physique z dans un milieu hétérogène tel qu'une zone souterraine, afin de la contraindre à un ensemble de données collectées dans le milieu par des mesures et observations préalables, relatives à son état ou sa structure.

Elle est caractérisée en ce qu'elle comporte l'application d'un algorithme de déformation graduelle d'un modèle stochastique à un vecteur gaussien (Y) ayant un nombre N de variables mutuellement indépendantes qui est relié à un vecteur uniforme (U) à N variables uniformes mutuellement indépendantes par une fonction de répartition gaussienne (G), de façon à définir une chaîne de réalisations u(t) du vecteur (U), et l'utilisation de ces réalisations u(t) pour générer des réalisations z(t) de cette grandeur physique que l'on cale par rapport aux données (non linéaires).

Suivant un premier mode de mise en oeuvre, on définit la chaîne de réalisations u(t) du vecteur uniforme (U) à partir d'une combinaison linéaire de réalisations d'un vecteur gaussien (Y) dont les coefficients de combinaison sont tels que la somme de leurs carrés est égale à l'unité.

Suivant un autre mode de mise en oeuvre, on réalise une déformation graduelle d'un nombre n de parties du modèle représentatif du milieu hétérogène tout en préservant la continuité entre ces n parties du modèle, par une subdivision du vecteur uniforme (U) en un nombre n de sous-vecteurs mutuellement indépendants.

D'autres caractéristiques et avantages de la méthode selon l'invention, apparaîtront à la lecture de la description ci-après d'un exemple non limitatif de réalisation, en se référant aux dessins annexés où :

- la Fig.1 montre la couche médiane d'une réalisation d'un modèle de faciès servant de référence, générée par simulation séquentielle d'indicatrices ;

- la Fig.2 montre la variation en fonction du temps de la pression obtenue dans un test de puits du modèle de référence ;

- les Fig.3A à 3E montrent respectivement cinq réalisations initiales de la couche médiane d'une zone réservoir, contraintes seulement par les faciès le long du puit ;

- les Fig. 4A à 4E montrent respectivement pour ces cinq réalisations, les courbes des pressions au puits dans le modèle de référence comparées à celles correspondant aux modèles initiaux ;

- les Fig.5A à 5E montrent respectivement cinq réalisations de la couche médiane du modèle de faciès conditionnées aux faciès le long du puits et calées par rapport à la courbe de pression obtenue par test de puits ;

- les Fig. 6A à 6E montrent respectivement pour les cinq réalisations, les courbes des pressions au puits dans le modèle de référence comparées à celles correspondant aux modèles calés ;

- les Fig.7A à 7E montrent respectivement comment les fonctions objectif correspondant respectivement à ces cinq exemples, varient avec le nombre d'itérations ;

- les Fig. 8A à 8E montrent les déformations graduelles opérées par un changement de coefficient d'anisotropie, sur un modèle à trois faciès généré par simulation séquentielle d'indicatrices; et

- les Fig. 9A à 9E montrent les déformations graduelles locales d'un modèle à trois faciès, générées par simulation séquentielle d'indicatrices.

**Description détaillée de la méthode**

On considère une zone d'étude que l'on subdivise par une grille à N mailles et l'on cherche à construire des réalisations ou représentations d'un modèle stochastique d'une certaine grandeur physique z représentant par exemple la perméabilité des formations dans la zone. Le modèle recherché doit s'ajuster à des données obtenues par des mesures ou observations en un certain nombre de points, et notamment à des données non linéaires.

Le calage d'un modèle stochastique à des données non linéaires peut être formulée comme un problème d'optimisation. On désigne par $f^{obs} = (f_1^{obs}, f_2^{obs}, f_3^{obs} \dots f_p^{obs})$, le vecteur des données non linéaires observées ou mesurées dans le milieu étudié (la zone réservoir), et par $f = (f_1, f_2, f_3, \dots, f_p)$, le vecteur correspondant des réponses du modèle stochastique de la perméabilité $Z = (Z_1, Z_2, \dots, Z_N)$. Le problème de contraindre le modèle stochastique Z par les observations consiste à générer une réalisation z de Z qui réduit à une valeur assez faible une fonction objectif que l'on définit comme la somme des erreurs quadratiques pondérées des réponses du modèle par rapport aux observations ou mesures dans la zone-réservoir, soit :

$$O = \frac{1}{2} \sum_{i=1}^{p} \omega_i (f_i - f_i^{obs})^2$$

où $\omega_1$ représente le poids attribué à la réponse $f_i$. Les fonctions $f_i$ (i=1, 2, ...., p) ainsi que la fonction objectif O sont des fonctions du vecteur Z. On se trouve devant un problème d'optimisation de dimension N.

Pour étendre le formalisme développé dans le brevet déjà cité, à la déformation graduelle de réalisations générées par simulation séquentielle non nécessairement gaussienne, on va partir d'un vecteur gaussien à N variables $Y_i$ avec i = 1, 2, ..., N, mutuellement indépendantes, de moyenne nulle et de variance égale à l'unité, et on va définir N variables uniformes mutuellement indépendantes $U_1, U_2, U_3, \dots U_N$ par :

$$U_i = G(Y_i) \ \forall \ i = 1, 2, ..., N$$

où G désigne la fonction de répartition gaussienne standardisée.

Ceci posé, on va appliquer l'algorithme de déformation graduelle développé dans un cadre gaussien, au vecteur gaussien $Y = (Y_1, Y_2, \dots, Y_N)$, pour construire une chaîne continue de réalisations du vecteur uniforme $U = (U_1, U_2, \dots U_N)$. Etant donné deux réalisations indépendantes $y_a$ et $y_b$ de Y, on définit la chaîne de réalisations u(t) du vecteur U que l'on obtient selon la relation :

$$u(t) = G(y_a \cos t + y_b \sin t) \tag{2}$$

Pour chaque t, u(t) est une réalisation du vecteur U. Ensuite, par échantillonnage de la distribution conditionnelle $F_c(z_i)$(i=1, 2,..... N) en utilisant les éléments du vecteur u(t), on obtient un vecteur z(t) qui est, pour chaque t, une réalisation du vecteur aléatoire Z. En conséquence, on peut ajuster le paramètre t comme dans le cas gaussien de façon à caler z(t) à des données non linéaires. Cette procédure est itérée jusqu'à atteindre un calage satisfaisant.

**Calage d'un modèle de faciès à des données de pression obtenues par des tests de puits**

Pour illustrer l'application de la méthode d'optimisation stochastique ci-dessus définie, on va chercher à caler un modèle stochastique de réservoir à des données de pressions obtenues par des tests de puits. La construction du modèle de réservoir est dérivée d'une formation pétrolière réelle qui comporte trois types de faciès : deux faciès réservoir de bonne qualité (faciès 1 et 2) et un type de faciès réservoir de très mauvaise qualité (faciès 3). La table 1 définit les propriétés pétrophysiques des trois faciès :

|          | $K_x(md)$ | $K_y(md)$ | $K_z(md)$ | Φ (%) | $c_t(10^{-5}bar^{-1})$ |
|----------|-----------|-----------|-----------|-------|------------------------|
| faciès 1 | 10.       | 10.       | 10.       | 17    | 2.1857                 |
| faciès 2 | 1.        | 1.        | 1.        | 14    | 2.0003                 |
| faciès 3 | 0.1       | 0.1       | 0.001     | 9     | 1.8148                 |

Pour représenter la distribution spécifique de faciès de la formation pétrolifère, on génère d'abord une réalisation binaire pour représenter le faciès 3 et son complément. Ensuite, dans la partie complémentaire du faciès 3, on génère une autre réalisation binaire indépendante de la première pour représenter les faciès 1 et 2. La formation est discrétisée par un maillage régulier de 60x59x15 blocs de taille 15mx15mx1.5m. Un modèle de variogramme exponentiel est utilisé pour estimer les distributions conditionnelles. La direction d'anisotropie principale est diagonale par rapport au maillage. Les portées du variogramme du faciès 3 selon les trois directions d'anisotropie sont respectivement de 300m, 80m et 3m. Les portées du variogramme des faciès 1 et 2 selon les trois directions d'anisotropie sont respectivement de 150m, 40m et 1.5m. Les proportions des faciès 1, 2, 3 sont respectivement de 6%, 16% et 78%.

On a réalisé un test de puits au moyen d'un simulateur de test de puits à différences finies, de la manière décrite par :

-    Blanc, G. et al : « Building Geostatistical Models Constrained by Dynamic Data - A Posteriori Constraints » in SPE 35478, Proc. NPF/SPE European 3D Reservoir Modelling Conference, Stavenger, Norway, 1996.

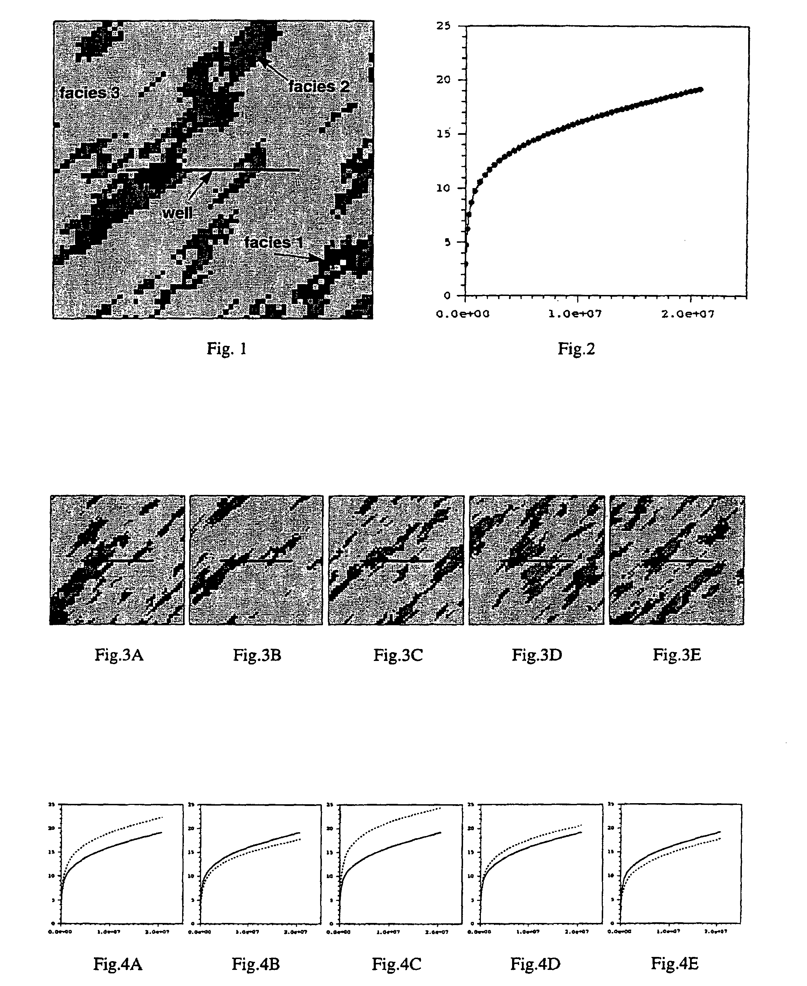

On voit sur la Fig.1 la couche médiane d'une réalisation qui sert de modèle de référence pour cette validation. La section du puits qui a été perforée traverse horizontalement la couche médiane du modèle de réservoir le long de l'axe x. Le diamètre du puits est de 7.85cm, la capacité du puits est nulle et les facteurs pariétaux (skin) des faciès 1, 2 et 3 sont respectivement 0, 3 et 50. Le test de puits synthétique dure 240 jours avec un débit constant de 5 m3/jour de façon à investiguer presque la totalité du champ pétrolifère. La Fig.2 montre la variation de pression en fonction du temps.

Le but était de construire des réalisations du modèle de faciès contraint par les faciès rencontré le long du puits et par la courbe de pression obtenue lors du test de puits. La fonction objective est définie comme la somme des différences quadratiques entre les réponses en pression du modèle de référence et les réponses en pression de la réalisation. Du fait que le comportement dynamique du modèle de réservoir est principalement contrôlé par le contraste entre les faciès réservoir de bonne et de mauvaise qualités, la réalisation binaire utilisée pour générer les faciès 1 et 2 a été fixée d'abord et seule la réalisation binaire utilisée pour générer le faciès 3 a été déformée pour le calage des données de pression.

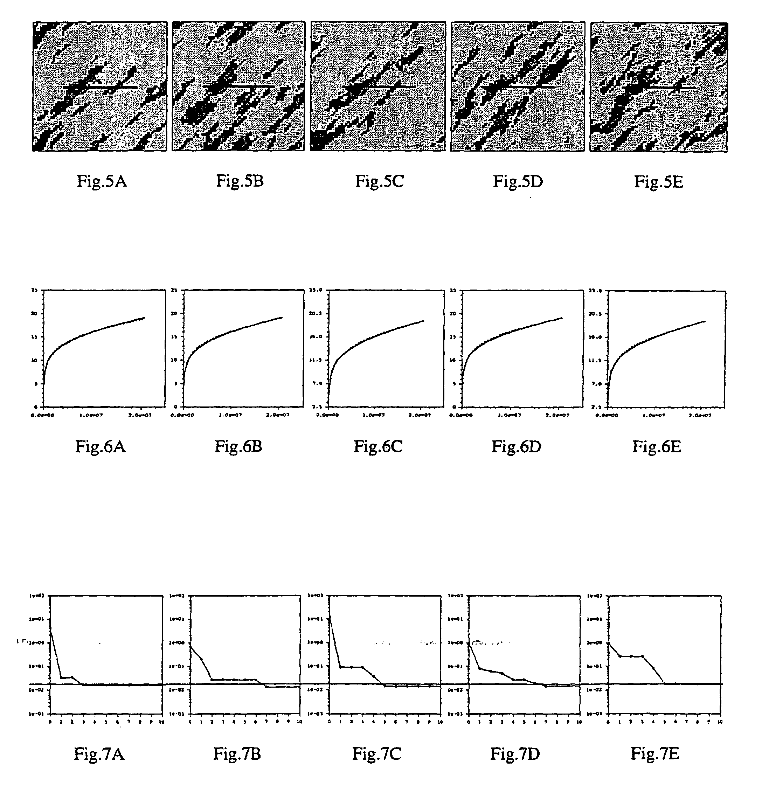

Les réponses en pression résultant des tests de puits pour les cinq réalisations des Fig.3A à 3E, sont différentes de celle du modèle de référence, comme le montrent les Fig. 4A à 4E. Partant respectivement de ces 5 réalisations indépendantes, en utilisant la méthode de calage itératif ci-dessus, on obtient après quelques itérations, cinq réalisations calées (Fig. 5A à 5E) pour lesquelles les courbes de pression correspondantes sont tout à fait en accord avec celles du modèle de référence, comme le montrent les Fig.6A à 6E.

**Déformation graduelle par rapport aux paramètres structuraux**

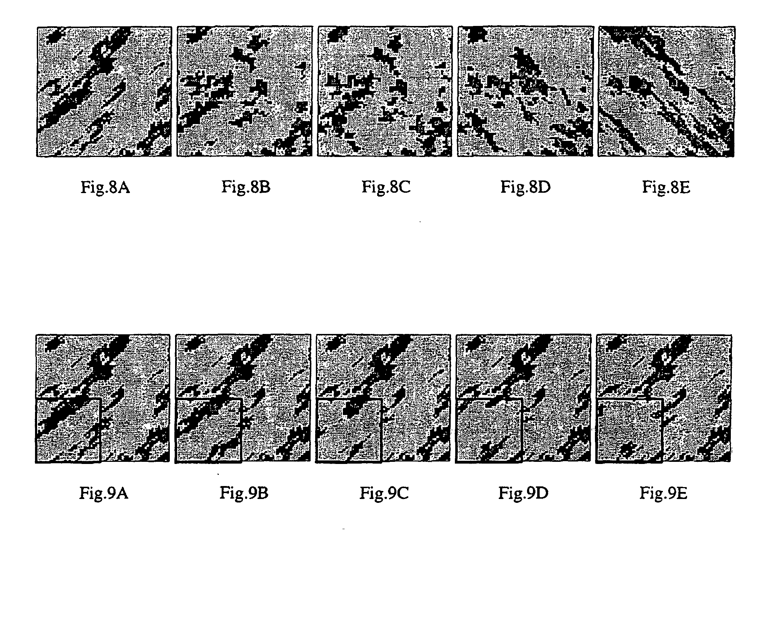

Dans de nombreux cas, on ne dispose pas de données suffisantes pour en déduire les paramètres structuraux du modèle stochastique : moyenne, variance, fonction de covariance, etc. Ces paramètres structuraux sont souvent donnés en termes d'intervalles ou de distributions a priori. Si leurs valeurs sont fausses, il est vain de rechercher une réalisation calée sur des données non linéaires. Aussi, il est essentiel pour les applications de pouvoir procéder à une déformation graduelle d'une réalisation avec modification simultanée de nombres aléatoires et des paramètres structuraux. L'algorithme de simulation séquentielle définie par l'équation (1) fournit cette possibilité de changer simultanément ou séparément l'opérateur structurel S et le vecteur uniforme U. Les Fig.8A-8E montrent les déformations graduelles que l'on obtient pour une réalisation fixe du vecteur uniforme U quand on change le coefficient d'anisotropie.

**Déformation graduelle locale ou régionalisée**

Quand les observations sont réparties sur des zones différentes d'une formation étudiée, un calage qui utiliserait une déformation globale risquerait d'être inefficace car l'amélioration de l'accord que l'on obtiendrait sur une zone pourrait le détériorer sur une autre zone. Il est donc bien préférable d'appliquer des déformations graduelles zone par zone. On considère une subdivision du vecteur U en un certain nombre n de sous-vecteurs $U^1$, $U^2$,...., $U^n$ mutuellement indépendants ce qui rend possible de réaliser individuellement leur déformation graduelle. En appliquant séparément à chacun des sous-vecteurs $U^1$, $U^2$,...., $U^n$, l'algorithme de déformation graduelle, on obtient une fonction de dimension n, du vecteur uniforme U :

$$U(t_1, t_2, ..., t_n) = \begin{bmatrix} U^1(t_1) \\ U^2(t_2) \\ \vdots \\ U^n(t_n) \end{bmatrix} = \begin{bmatrix} G(Y_a^1 \cos t_1 + Y_b^1 \sin t_1) \\ G(Y_a^2 \cos t_2 + Y_b^2 \sin t_2) \\ \vdots \\ G(Y_a^n \cos t_n + Y_b^n \sin t_n) \end{bmatrix}$$

où $Y_a^i$ et $Y_b^i$ pour tout i = 1, 2, ..., n, sont des sous-vecteurs gaussiens indépendants. Pour un ensemble de réalisations de $Y_a$ et $Y_b$, on résout un problème d'optimisation de n paramètres $t_1$, $t_2$, ..., $t_n$ pour obtenir une réalisation qui améliore, sinon maintient, le calage des données. Cette procédure peut être itérée jusqu'à atteindre un calage satisfaisant.

En réalisant des déformations locales graduelles, on améliore de façon significative la vitesse de calage dans tous les cas où les mesures ou observations sont réparties dans différentes zones du milieu.

On voit bien l'effet de cette déformation locale graduelle sur le modèle à trois faciès, des Fig. 9A à 9E où seule la partie inférieure gauche délimitée est affectée.

La méthode selon l'invention peut être facilement généralisée à la déformation graduelle d'une représentation ou réalisation d'un modèle stochastique quelconque, car générer une réalisation d'un tel modèle stochastique se ramène toujours à la génération des nombres uniformes.

**Revendications**

1. Méthode pour déformer graduellement une représentation ou réalisation, générée par simulation séquentielle, d'un modèle stochastique non nécessairement gaussien d'une grandeur physique z dans un milieu hétérogène tel qu'une zone souterraine, afin de la contraindre à un ensemble de données collectées dans le milieu par des mesures et observations préalables, relatives à son état ou sa structure, **caractérisée en ce qu'**elle comporte :

   - l'application d'un algorithme de déformation graduelle d'un modèle stochastique à un vecteur gaussien (Y) à N variables mutuellement indépendantes, ce vecteur gaussien étant relié à un vecteur uniforme (U) à N variables uniformes mutuellement indépendantes par une fonction de répartition gaussienne (G), de façon à construire, à partir d'une combinaison linéaire de réalisations du vecteur gaussien (Y) avec des coefficients de combinaison tels que la somme de leurs carrés est égale à l'unité, une chaîne de réalisations u(t) du vecteur U ; et

   - l'utilisation de ces réalisations u(t) pour générer des réalisations z(t) de cette grandeur physique, que l'on cale par rapport aux données.

2. Méthode selon la revendication 1, **caractérisée en ce qu'**elle comporte une déformation graduelle du modèle représentatif du milieu hétérogène, simultanément par rapport aux paramètres structuraux et aux nombres aléatoires.

3. Méthode selon la revendication 1, **caractérisée en ce qu'**elle comporte une déformation graduelle séparée d'un nombre n de parties du modèle représentatif du milieu hétérogène tout en préservant la continuité entre ces n parties du modèle, par une subdivision du vecteur uniforme en n sous-vecteurs mutuellement indépendants.

**EP 1 110 106 B1**

**Patentansprüche**

1. Verfahren, um graduell eine durch sequentielle Simulation generierte Abbildung oder Darstellung von einem nicht notwendigerweise Gaußschem stochastischen Modell einer physische Größe z in einem heterogenen Medium wie einer unterirdischen Zone zu deformieren, um sie einer Gesamtheit von Daten aufzuerlegen, die in dem Medium durch vorherige Messungen und Beobachtungen bezüglich seines Zustands oder seiner Struktur gesammelt sind, **dadurch gekennzeichnet, dass** es umfasst:

   - die Anwendung eines graduellen Deformationsalgorithmus eines stochastischen Modells mit einem Gaußschen Vektor (Y) bei N voneinander unabhängigen Variablen, wobei dieser Gaußsche Vektor mit einem gleichförmigen Vektor (U) bei N gleichförmigen, voneinander unabhängigen Variablen durch eine Gaußsche Verteilungsfunktion (G) derart verbunden ist, dass ausgehend von einer Linearkombination von Darstellungen des Gaußschen Vektors (Y) mit Kombinationskoeffizienten, derart, dass die Summe von deren Quadraten gleich eins ist, eine Kette von Darstellungen u(t) des Vektors U gebildet wird; und

   - die Verwendung dieser Darstellungen u(t) um Darstellungen z(t) von dieser physikalischen Größe zu generieren, die man in Bezug zu den Daten festsetzt.

2. Verfahren nach Anspruch 1, **dadurch gekennzeichnet, dass** es eine graduelle Deformation des für das heterogene Medium repräsentativen Modells gleichzeitig in Bezug zu den Strukturparametern und Zufallszahlen umfasst.

3. Verfahren nach Anspruch 1, **dadurch gekennzeichnet, dass** es eine graduelle Deformation, getrennt von der Anzahl n von Partien des für das heterogene Medium repräsentativen Modells unter Erhalt der Kontinuität zwischen diesen n Partien des Modells durch Unterteilung des gleichförmigen Vektors in n voneinander unabhängige Untervektoren umfasst.

**Claims**

1. Method for gradually deforming a representation or realization, generated by sequential simulation, of a stochastic model, not necessarily being Gaussian, of a physical magnitude z in a heterogeneous medium, such as a subsurface zone, in order to constrain it to a set of data collected in the medium by prior measurements and observations, relating to its state or its structure, *characterised by the fact that* it includes:

   - the application of a gradual deformation algorithm of a stochastic model to a Gaussian vector (Y) with N mutually independent variables, this Gaussian vector being linked to a uniform vector (U) with N mutually independent uniform variables by a Gaussian distribution function (G), so as to construct, from a linear combination of realizations of the Gaussian vector (Y) with combination coefficients such as the sum of their squares is equal to unity, a chain of realizations u(T) of the vector U; and

   - the use of these realisations u(t) to generate realisations z(t) of this physical magnitude, which are set relative to the data.

2. Method as described in claim 1, *characterised by the fact that* it includes gradual deformation of the representative model of the heterogeneous medium simultaneously relative to structural parameters and to random numbers.

3. Method as described in claim 1, *characterised by the fact that* it includes a separate gradual deformation of a number n of parts of the representative model of the heterogeneous medium, while preserving the continuity between these n parts of the model by sub-division of the uniform vector into n mutually independent sub-vectors.

Fig. 1

Fig.2

Fig.3A      Fig.3B      Fig.3C      Fig.3D      Fig.3E

Fig.4A      Fig.4B      Fig.4C      Fig.4D      Fig.4E

Fig.5A          Fig.5B          Fig.5C          Fig.5D          Fig.5E

Fig.6A          Fig.6B          Fig.6C          Fig.6D          Fig.6E

Fig.7A          Fig.7B          Fig.7C          Fig.7D          Fig.7E

Fig.8A     Fig.8B     Fig.8C     Fig.8D     Fig.8E

Fig.9A     Fig.9B     Fig.9C     Fig.9D     Fig.9E